## Europäisches Patentamt
## European Patent Office
## Office européen des brevets

(19)

(11) Publication number: **0 033 650**
**B1**

(12)

# EUROPEAN PATENT SPECIFICATION

(45) Date of publication of patent specification: **13.07.83**

(51) Int. Cl.³: **C 03 B 37/10**

(21) Application number: **81300415.7**

(22) Date of filing: **02.02.81**

(54) Process for the concentration of fibrous materials.

(30) Priority: **31.01.80 GB 8003244**

(43) Date of publication of application:
**12.08.81 Bulletin 81/32**

(45) Publication of the grant of the patent:
**13.07.83 Bulletin 83/28**

(84) Designated Contracting States:
**AT BE DE FR GB IT NL SE**

(56) References cited:
**US - A - 3 865 315**

(73) Proprietor: **T&N Materials Research Limited**
**20 St. Mary's Parsonage**
**Manchester M3 2NL (GB)**

(72) Inventor: **Atkinson, Alan William**
**94 Elmpark Grove**
**Rochdale Lancashire (GB)**
Inventor: **Steer, Adrian Michael**
**488 Newington Ashfield Valley**
**Rochdale Lancashire (GB)**

(74) Representative: **Newman, Dennis Daniel Ernest**
**et al,**
**20, St. Mary's Parsonage**
**Manchester, M3 2NL. (GB)**

Courier Press, Leamington Spa, England

Process for the concentration of fibrous material

This invention relates to the concentration of fibrous material in a mixture thereof with non-fibrous material.

Such a mixture is for example formed when a stream of silicate or like mineral melt is disintegrated to form fibres. Not all the melt becomes converted to fibres, and that which does not is present in the product (known as mineral wool) predominantly in the form of granules known as 'shot'. As much as 40% by weight or even more of the product may be constituted by shot; and because shot is abrasive, renders the product unpleasant to handle, and deleteriously affects certain important properties (for example, the capacity of the product to reinforce matrices and to reduce transmission of heat), the product is often treated to reduce its content of shot and thus to increase its concentration of fibre. However, because the density of mineral fibre is substantially the same as that of the associated non-fibrous material, separation of the two forms is a matter of considerable difficulty.

One process of concentrating fibrous material in mineral wool or like product is described in US Patent Specification 3,865,315, and in this process and aqueous suspension of mineral wool, having a content of dispersed solids amounting to 0.25—2% by weight is fed continuously to the lower part of a tubular vessel and gently agitated by means of stirrer rotating at 30—100rpm. As the suspension rises in the vessel, the shot settles out under gravity because of its greater compactness, and it is drawn off from time to time by syphoning off the very bottom liquid layer. The upper liquid layer, whose solids content is correspondingly enriched in fibre, is poured or syphoned off. The fibre-enriched fraction thus separated can be treated direct to recover from it a fibrous product of improved properties, or can be subjected to further processing to increase still further the proportion of fibre in it.

We have now found that the process just described can be made more efficient (in terms of increase in the ratio of fibre: non-fibre achieved per pass) by ensuring that the upward flow of aqueous suspension which causes disengagement of the nonfibrous from the fibrous material is substantially non-turbulent, and by passing gas bubbles upwardly through the suspension during its upward flow. Rotary stirring of the suspension is avoided, and by keeping the flow non-turbulent, shot is not induced to move in a direction counter to the desired direction, which is downwards. The gas bubbles impart only highly localised agitation, and this assists disengagement of granular from fibrous material.

Preferably, the upward non-turbulent flow of the aqueous suspension is produced by allowing the suspension to flow under gravity down a channel at the lower end of which it is diverted so as to flow upwardly around said channel.

It is further preferred that the rate of upward flow of the aqueous suspension should be in the range 0.1—2 cm per second.

The aqueous suspension subjected to upward non-turbulent flow suitably has a solids content in the range 0.25—2.5% by weight.

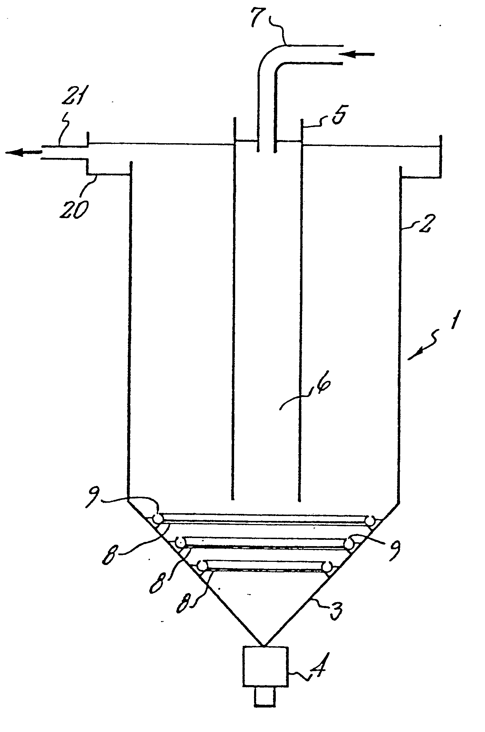

The invention will now be further described with reference to the accompanying drawing, which is a diagrammatic vertical section through a vessel in which the process can be carried out.

The vessel 1 (suitably of diameter 1.2 m) has a vertical cylindrical wall 2 (height 1.8 m) and a conical bottom 3 (height 1.2 m) whose extremity is connected to a receptacle 4 for separated shot. Disposed axially within the vessel is a pipe 5 forming a channel 6 for the delivery to the lower part of the vessel of aqueous suspension admitted (as indicated by the arrow) via a pipe 7.

Within the conical bottom 3 of vessel 1 are a number of toroidal tubes 8 by which air or other suitable gas inert to the suspension, such as nitrogen, can be passed, via holes 9 about 0.5 mm diameter in the tubes, to bubble up through aqueous suspension flowing upwardly around the channel 6 once conical bottom 3 has been filled.

Surrounding the upper rim of vessel 1 is a coaxial trough 20 into which aqueous suspension enriched in fibre following its upward flow in the vessel overflows and from which it can be recovered via exit pipe 21.

In concentrating the fibre in a typical commercially available mineral wool formed from a silicate melt and containing about 45% by weight of shot, the following procedure can be adopted.

An unopened bale of mineral wool is crushed in a press (pressure about 1 MPa) to shorten the average fibre length to a value in the range 1—10 mm. The bale is then broken up without any substantial further reduction in fibre length, and the resulting material is made into a mobile slurry of solids content 10% by weight and adding it with vigorous stirring to an aqueous solution containing 0.1% by weight of surface active agent. Conveniently, the surfactant is a cationic long-chain-alkyl substituted imidazoline, such as that which has been used for many years to coat glass fibres to improve their dispersibility in aqueous media when making them up into glass fibre tissue. The mobile slurry is prepared in a vat equipped with a ribbon mixer to break down the bulk of any residual fibre of length greater than 10 mm.

The slurry is transferred from the vat to a tank in which, with continuous stirring, it is diluted to form an aqueous suspension of solids content 1% by weight, with a fibre; non-fibre ratio about 1.25:1. This suspension is pumped via pipe 7 into the upper part of pipe 5 in vessel 1 and allowed to flow under gravity down channel 6 into the conical bottom 3 of the vessel the aqueous suspension flows upwardly around channel 6, the rate of feed via pipe 7 being adjusted so as to produce a rate of non-turbulent upward flow of about 5 mm per second. During this upward flow, there are passed upwardly through the suspension air bubbles which issue from the holes 9 in the tubes 8. This reduces the tendency for the rising fibres to form persistent clumps as they become progressively disengaged from shot during their upward passage in the vessel.

Shot sinking to the bottom of the vessel is run off from time to time into the receptacle 4. It is found to be substantially free from fibre, and has a preponderance of coarse particles, such as are likely to damage separation equipment when they move at higher velocities than are here developed.

The aqueous suspension overflowing into the trough 20 in recovered via exit pipe 21 and will usually have a fibre: non-fibre weight ratio greater than 5:1. For mineral wools with irregular shot, the ratio will usually be about 10:1; for mineral wools with regular spherical shot, the ratio will usually be about 20:1.

The aqueous suspension issuing from exit pipe 21 can be dewatered to about 50% water content by any convenient means (e.g. with the use of a centrifuge). It can, if desired, then be dried to a moisture content below about 5% by weight.

Alternatively, the aqueous suspension issuing from exit pipe 21 can be fed to a hydrocyclone, preferably as described in our patent application EP—A—0 033 649 filed on the same day as this application, to increase still further the proportion of fibre in it.

## Claims

1. Process for the concentration of fibrous material in a mixture thereof with non-fibrous material, by causing an aqueous suspension of said mixture to flow upwardly to bring about settling out of material of reduced fibre content and formation of a fibre-enriched fraction above it, which is then separated, characterised in that said upward flow is substantially non-turbulent and is carried out with gas bubbles passing upwardly through the suspension.

2. Process according to claim 1, in which upward non-turbulent flow of said aqueous suspension is produced by allowing the suspension to flow under gravity down a channel at the lower end of which it is diverted so as to flow upwardly around said channel.

3. Process according to claim 1 or 2, in which the rate of upward non-turbulent flow of said aqueous suspension is in the range 0.1—2 cm per second.

4. Process according to any one of claims 1 to 3, in which the solids content of said aqueous suspension is in the range 0.25—2.5% by weight.

5. Process according to any one of claims 1 to 4, applied to the concentration of fibre obtained from mineral melt in a mixture thereof with non-fibrous mineral melt material.

## Patentansprüche

1. Verfahren zur Konzentrierung von fasrigem Material in einem Gemisch derselben mit nicht fasrigem Material, wobei man eine wäßrige Suspension dieses Gemisches nach oben strömen läßt, um das Absetzen des Materials mit reduziertem Fasergehalt und die Bildung einer an Faser angereicherten Fraktion darüber zu erzielen, die dann abgetrennt wird, dadurch gekennzeichnet, daß die nach oben gerichtete Strömung im wesentlichen nicht turbulent ist und durch Gasblasen ausgeführt wird, welche nach oben durch die Suspension perlen.

2. Verfahren nach Anspruch 1, dadurch gekennzeichnet, daß die nach oben gerichtete nicht turbulente Strömung dieser wäßrigen Suspension erzeugt wird, indem man die Suspension unter Schwerkraft einen Kanal hinunter fließben läßt, an dessen unterem Ende sie so abgelenkt wird, daß sie um diesen Kanal herum nach oben strömt.

3. Verfahren nach Anspruch 1 oder 2, dadurch gekennzeichnet, daß die Geschwindigkeit der aufwärts gerichteten nicht turbulenten Strömung dieser wäßrigen Suspension im Bereich von 0,1 bis 2 cm pro Sekunde liegt.

4. Verfahren nach einem der Ansprüche 1 bis 3, dadurch gekennzeichnet, daß der Feststoffgehalt dieser wäßrigen Suspension im Bereich von 0,25 bis 2,5 Gew. —% liegt.

5. Verfahren nach einem der Ansprüche 1 bis 4, dadurch gekennzeichnet, daß es angewandt wird auf die Konzentrierung von aus einer Mineralschmelze erhaltenen Fasern in einem Gemisch derselben mit nicht fasrigem Mineralschmelzmaterial.

## Revendications

1. Procédé pour concentrer un matériau fibreux en mélange avec un matériau non fibreux, par écoulement vers le haut d'une suspension aqueuse du mélange en vue de provoquer le dépôt d'un matériau à teneur en fibres réduite et la formation d'une fraction enrichie en fibres au-dessus de ce matériau qui est alors séparée, caractérisé en ce que l'écoulement vers le haut est en substance non turbulent et est effectué tandis que des bulles de gaz montent à travers la suspension.

2. Procédé suivant la revendication 1, dans lequel on produit en écoulement non turbulent de la solution aqueuse en permettant à la suspension de s'écouler pa gravité dans un conduit à l'extrémité inférieure duquel elle est déviée de manière à s'écouler vers le haut autour du conduit.

3. Procédé suivant la revendication 1 ou 2, dans lequel la vitesse de l'écoulement vers le haut non turbulent de la suspension aqueuse est comprise entre 0,1 et 2 cm par seconde.

4. Procédé suivant l'une quelconque des revendications 1 à 3, dans lequel la teneur en matières solides de la suspension aqueuse est comprise entre 0,25 et 2,5% en poids.

5. Procédé suivant l'une quelconque des revendications 1 à 4, appliqué à la concentration de fibres obtenues à partir d'une matière minérale fondue en mélange avec une matière minérale fondue non fibreuse.